# EUROPEAN PATENT APPLICATION

(11) **EP 3 547 155 A1**
(43) Date of publication of application: **02.10.2019**
(21) Application number: 19166178.4
(22) Date of filing: 29.03.2019
(51) Int. Cl.: G06F 16/35, G06F 16/906, G06Q 30/02, G06Q 10/10, G06Q 50/00, G06Q 50/20, G06F 16/335, G06F 16/9035

(54) **ENTITY REPRESENTATION LEARNING FOR IMPROVING DIGITAL CONTENT RECOMMENDATIONS**

(30) Priority: 30.03.2018 US 201815941750
(71) Applicant: Microsoft Technology Licensing, LLC, Redmond, WA 98052 (US)
(72) Inventor: SAHA, Ankan, Redmond, WA 98052 (US); MURALIDHARAN, Ajith, Redmond, WA 98052 (US)
(74) Representative: CMS Cameron McKenna Nabarro Olswang LLP

(57) **Abstract**

A machine is configured to improve content recommendations. For example, the machine accesses a first score representing an affinity between a job description and a member profile. The first score is generated based on a first embedding that represents the job description, and includes a feature that identifies an organization associated with the job description, and a second embedding that represents the member profile. The machine, based on the first score exceeding a first threshold value, causes a display of a recommendation of the job description in a user interface. The machine, based on an indication of selection of the job description, generates a third embedding that represents an article associated with the organization. The machine generates a second score that represents a member profile-job affinity, and, based on the second score exceeding a second threshold value, causes a display of a recommendation of the article in the user interface.

## Description

### TECHNICAL FIELD

The present application relates generally to systems, methods, and computer program products for entity representation learning to improve digital content recommendations.

### BACKGROUND

Some personalized searches involve analyzing the user characteristics against a corpus of possible results to find the best options for a user. For example, a job search may generate different results for different users depending on their background, education, experience, etc. Sometimes, finding similarities between users is helpful because if a user has shown interest in a job, a user with similar characteristics may also be interested in that job, too.

However, the number of users of an online system may be in the millions, and the categories of data associated with the users (e.g., educational institutions, current jobs, etc.) may also be into the thousands or millions. Finding similarities among all these users may be a computationally expensive proposition given the large amount of data and possible categories, thereby resulting in a technical problem of excessive consumption of the electronic resources of a computer system performing the search.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

A machine is configured to improve content recommendations. For example, the machine accesses a first score representing an affinity between a job description and a member profile. The first score is generated based on a first embedding that represents the job description, and includes a feature that identifies an organization associated with the job description, and a second embedding that represents the member profile. The machine, based on the first score exceeding a first threshold value, causes a display of a recommendation of the job description in a user interface. The machine, based on an indication of selection of the job description, generates a third embedding that represents an article associated with the organization. The machine generates a second score that represents a member profile-job affinity, and, based on the second score exceeding a second threshold value, causes a display of a recommendation of the article in the user interface.

A first aspect provides a method comprising: accessing, from a database, a first affinity score value that represents an affinity between a job description on an online service and a member profile associated with a member of the online service, the first affinity score value being generated based on a first embedding and a second embedding using one or more machine learning algorithms, the first embedding representing the job description, and including a particular feature that identifies an organization associated with the job description, the second embedding representing the member profile. The method comprises, based on the first affinity score value exceeding a first threshold value, causing a display of a first recommendation of the job description in a user interface of a client device associated with the member; based on an indication, received from the client device, of a selection of the job description in response to the first recommendation, updating the second embedding to add the particular feature to the second embedding; based on the indication of the selection of the job description in response to the first recommendation, generating a third embedding that represents an article associated with the organization, and includes the particular feature that identifies the organization, the generating of the third embedding being performed using one or more hardware processors; using the one or more machine learning algorithms, generating, based on the updated second embedding and the third embedding, a second affinity score value that represents an affinity between the member profile and the article; and based on the second affinity score value exceeding a second threshold value, causing a display of a second recommendation of the article in the user interface of the client device associated with the member.

In some examples, the job description, the member profile, and the article are entities associated with the online service, and the method further comprises: updating one or more further embeddings that represent one or more further entities associated with the online service, the updating of the one or more further embeddings including adding one or more further features that are included in at least one of the first embedding, second embedding, or third embedding to the one or more further embeddings, the updating of the one or more further embeddings being based on at least one of the indication of the selection of the job description in response to the first recommendation, or an indication, received from the client device, of a selection of the article in response to the second recommendation.

In various examples, one or more machine learning algorithms pertain to at least one of recommending job descriptions to one or more members of the online service or recommending articles to the one or more members of the online service, wherein the first embedding includes a first feature vector that includes a first set of features that represent the job description, the particular feature being included in the first set of features, wherein the second embedding includes a second feature vector that includes a second set of features that represent the member profile, and wherein the method further comprises: determining that the member is an active job seeker of jobs at the organization based on a plurality of selections, by the member, to view a plurality of job descriptions associated with the organization; and further updating the second embedding to add a further feature to the second embedding, the further feature indicating that the member is an active job seeker of jobs at the organization; and using the first embedding, the further updated second embedding, and the one or more machine learning algorithms, training an affinity feature model, the training including generating a first set of additional features pertaining to the affinity between the job description and the member profile based on the first feature vector and the second feature vector. For example, the affinity feature model predicts at least one of a first likelihood that the member will select the job description, or a second likelihood that the member will select the article.

In some cases the method further comprises: updating at least one of the first embedding or the third embedding to add the further feature to the at least one of the first embedding or the third embedding; and performing further training of the affinity feature model using at least one of the updated first embedding or the updated third embedding. In some cases the generating of the second affinity score value that represents the affinity between the member profile and the article is based on the training of the affinity feature model using at least one of the updated first embedding, the updated second embedding, or the updated third embedding. In some cases the third embedding includes a third feature vector that includes a third set of features that represent the article associated with the organization, the particular feature being included in the third set of features, wherein the training of the affinity feature model includes: adding a member-article affinity layer to the affinity feature model to generate a second set of additional features pertaining to the affinity between the member profile and the article based on the second feature vector and the third feature vector, the adding of the member-article affinity layer to the affinity feature model including performing a Hadamard product operation on the second feature vector and the third feature vector, the performing of the Hadamard product resulting in a generation of a fourth feature vector that includes the second set of additional features, and wherein the second affinity score value is generated based on the fourth feature vector that includes the second set of additional features.

In various examples the first recommendation is generated using nearest neighbor representations for the job description based on a Euclidian distance value.

In some cases the second recommendation is generated using nearest neighbor representations for the article based on a Euclidian distance value.

In some cases wherein the first embedding, the second embedding, and the third embedding are stored at a centralized location, the storing at the centralized location providing accessibility, by one or more recommendation applications, to the first embedding, the second embedding, and the third embedding, and sharing of embedding data among the one or more recommendation applications.

A second aspect provides a system comprising: one or more hardware processors; and a non-transitory machine-readable medium for storing instructions that, when executed by the one or more hardware processors, cause the one or more hardware processors to perform operations comprising: accessing, from a database, a first affinity score value that represents an affinity between an article on an online service and a member profile associated with a member of the online service, the first affinity score value being generated based on a first embedding and a second embedding using one or more machine learning algorithms, the first embedding representing the article, and including a particular feature that identifies an organization associated with the article, the second embedding representing the member profile; based on the first affinity score value exceeding a first threshold value, causing a display of a first recommendation of the article in a user interface of a client device associated with the member; based on an indication, received from the client device, of a selection of the article in response to the first recommendation, updating the second embedding to add the particular feature to the second embedding; based on the indication of the selection of the article in response to the first recommendation, generating a third embedding that represents a job recommendation associated with the organization, and includes the particular feature that identifies the organization; using the one or more machine learning algorithms, generating, based on the updated second embedding and the third embedding, a second affinity score value that represents an affinity between the member profile and the job description; and based on the second affinity score value exceeding a second threshold value, causing a display of a second recommendation of the job description in the user interface of the client device associated with the member.

In some cases the member profile, and the job description are entities associated with the online service, and wherein the operations further comprise: updating one or more further embeddings that represent one or more further entities associated with the online service, the updating of the one or more further embeddings including adding one or more further features that are included in at least one of the first embedding, second embedding, or third embedding to the one or more further embeddings, the updating of the one or more further embeddings being based on at least one of the indication of the selection of the article in response to the first recommendation, or an indication, received from the client device, of a selection of the job description in response to the second recommendation.

In some cases the first recommendation is generated using nearest neighbor representations for the article based on a Euclidian distance value.

In some cases the second recommendation is generated using nearest neighbor representations for the job description based on a Euclidian distance value.

In some cases the first embedding, the second embedding, and the third embedding are stored at a centralized location, the storing at the centralized location providing accessibility, by one or more recommendation applications, to the first embedding, the second embedding, and the third embedding, and sharing of embedding data among the one or more recommendation applications.

A third aspect provides a non-transitory machine-readable medium for storing instructions that, when executed by one or more hardware processors, cause the one or more hardware processors to perform operations comprising:accessing, from a database, a first affinity score value that represents an affinity between a job description on an online service and a member profile associated with a member of the online service, the first affinity score value being generated based on a first embedding and a second embedding using one or more machine learning algorithms, the first embedding representing the job description, and including a particular feature that identifies an organization associated with the job description, the second embedding representing the member profile; based on the first affinity score value exceeding a first threshold value, causing a display of a first recommendation of the job description in a user interface of a client device associated with the member; based on an indication, received from the client device, of a selection of the job description in response to the first recommendation, updating the second embedding to add the particular feature to the second embedding; based on the indication of the selection of the job description in response to the first recommendation, generating a third embedding that represents an article associated with the organization, and includes the particular feature that identifies the organization; using the one or more machine learning algorithms, generating, based on the updated second embedding and the third embedding, a second affinity score value that represents an affinity between the member profile and the article; and based on the second affinity score value exceeding a second threshold value, causing a display of a second recommendation of the article in the user interface of the client device associated with the member.

In some cases the one or more machine learning algorithms pertain to at least one of recommending job descriptions to one or more members of the online service or recommending articles to the one or more members of the online service, wherein the first embedding includes a first feature vector that includes a first set of features that represent the job description, the particular feature being included in the first set of features, wherein the second embedding includes a second feature vector that includes a second set of features that represent the member profile, and wherein the operations further comprise: determining that the member is an active job seeker of jobs at the organization based on a plurality of selections, by the member, to view a plurality of job descriptions associated with the organization; and updating the second embedding to add a further feature to the second embedding, the further feature indicating that the member is an active job seeker of jobs at the organization; and using the first embedding, the updated second embedding, and the one or more machine learning algorithms, training an affinity feature model, the training including generating a first set of additional features pertaining to an affinity between the job description and the member profile based on the first feature vector and the second feature vector.

In some cases the affinity feature model predicts at least one of a first likelihood that the member will select the job description, or a second likelihood that the member will select the article.

In some cases the operations further comprise: updating at least one of the first embedding or the third embedding to add the further feature to the at least one of the first embedding or the third embedding; and performing further training of the affinity feature model using at least one of the updated first embedding or the updated third embedding.

In examples generating of the second affinity score value that represents the affinity between the member profile and the article is based on the training of the affinity feature model using at least one of the updated first embedding, the updated second embedding, or the updated third embedding.

### BRIEF DESCRIPTION OF THE DRAWINGS

Some embodiments are illustrated by way of example and not limitation in the figures of the accompanying drawings, in which:
FIG. 1 is a network diagram illustrating a client-server system, according to some example embodiments;
FIG. 2 illustrates the training and use of a machine-learning program,
according to some example embodiments;
FIG. 3 is a block diagram illustrating an article embedding generated by a machine learning system, according to some example embodiments;
FIG. 4 is a block diagram illustrating a deep network for the determination of the member-article affinity by a machine learning system, according to some example embodiments;
FIG. 5 is a block diagram illustrating a deep network for the determination of the member-job affinity by a machine learning system, according to some example embodiments;
FIG. 6 is a block diagram illustrating components of a machine learning system, according to some example embodiments;
FIG. 7 is a flowchart illustrating a method for entity representation learning to improve digital content recommendations, according to some example embodiments;
FIG. 8 is a flowchart illustrating a method for entity representation learning to improve digital content recommendations, and representing an additional step of the method illustrated in FIG. 7, according to some example embodiments;
FIG. 9 is a flowchart illustrating a method for entity representation learning to improve digital content recommendations, and representing step 702 in more detail, and representing additional steps of the method illustrated in FIG. 7, according to some example embodiments;
FIG. 10 is a flowchart illustrating a method for entity representation learning to improve digital content recommendations, and representing additional steps of the method illustrated in FIG. 9, according to some example embodiments;
FIG. 11 is a flowchart illustrating a method for entity representation learning to improve digital content recommendations, and representing steps 708, 908, and 710 of the method illustrated in FIG. 9 in more detail, according to some example embodiments;
FIG. 12 is a flowchart illustrating a method for entity representation learning to improve digital content recommendations, according to some example embodiments; and
FIG. 13 is a block diagram illustrating components of a machine, according to some example embodiments, able to read instructions from a machine-readable medium and perform any one or more of the methodologies discussed herein.

### DETAILED DESCRIPTION

Example methods and systems for entity representation learning to improve digital content recommendations are described. In the following description, for purposes of explanation, numerous specific details are set forth to provide a thorough understanding of example embodiments. It will be evident to one skilled in the art, however, that the present subject matter may be practiced without these specific details. Furthermore, unless explicitly stated otherwise, components and functions are optional and may be combined or subdivided, and operations may vary in sequence or be combined or subdivided.

Digital content, such as online articles, is ubiquitous in multiple avenues of an online service - as a part of a flagship feed, interest feed, emails, notifications, and other products. An example of an online service is a social network service (e.g., LinkedIn® professional networking services). Despite the omnipresence of the digital content items on the social network service, there is limited content personalization to the interests of particular users.

Generally, only basic content features associated with digital content are used for the models that determine which digital content items should be shown to particular users (hereinafter also "members of the social network service" or "members"). For example, an article provided in the feed of an online service, such as a social network service (hereinafter also "SNS"), is ranked and displayed to a member of the SNS based on the global popularity of the article, or based on the member's social affinity to the author of the article or another member who shared the article.

In some example embodiments, relevance of information is an important factor in improving recommendations and providing a more engaged user experience at a social networking service (hereinafter also "SNS"), such as Linkedin. Example of applications that have been enhanced by providing relevant information to users are feed ranking, job recommendations, people search, job search, content search, recruiter search, and people you may know (hereinafter also "PYMK").

Certain key data features (hereinafter also "attributes") shared across multiple such applications are repeatedly used for training machine learning models. In machine learning, a feature is an individual measurable property or characteristic of a phenomenon being observed. For example, in the context of a particular SNS, member profiles, job descriptions, and digital content, such as articles, are three key components of the SNS ecosystem. Member and job features are inputs to machine learning models that identify jobs that users may be interested in, or to facilitate a job search. According to another example, member and article features are inputs to machine learning models that identify relevant articles for users, and facilitate content recommendations in a feed.

In some example embodiments, a machine learning system stores entity embeddings of various types (e.g., member embeddings, job description embeddings, article embeddings, etc.) in a centralized fashion which enhances the building of machine learning models across a plurality of various applications. The information included in some entity embeddings may be shared among other entity embeddings, which in turn enables sharing of information pertaining to certain entities (e.g., member profiles, job applications, articles, companies, industries, interest clusters, skills, etc.) with various machine learning models solving problems pertaining to other entities.

For instance, in the context of a jobs-you-may-be-interested-in (hereinafter also "JYMBII") application, using deep learning methods, one or more machine learning models may be trained to generate (e.g., develop, build, update, etc.) different types of supervised latent representations (hereinafter also "embeddings") for members and jobs using back-propagation (e.g., by building a deep and wide model that utilizes embeddings for members and jobs). Similarly, in the context of an article recommendation problem, the one or more machine learning models may be trained to generate member and article latent representations. Depending on the volume of digital content seen by a user (e.g., a member of the SNS), the latent representation of the user (e.g., the embedding representing the member profile of the member and/or content presented to the member and/or actions taken by the member) might not be very accurate. If a user is an active job seeker, the one or more machine learning models may generate a reasonably accurate latent representations of the member from the JYMBII application, which can then be used to initialize a model for article recommendation tasks (or for scoring an article recommendation task) in order to identify online articles that discuss the company associated with the jobs for which the user has applied.

Additionally or alternatively, in the context of a job recommendation problem, the one or more machine learning models may be trained, using the member latent representation and article latent representations, to identify the target companies that the user is interest in based on articles read by the user, wherein the articles discuss the target companies. The one or more machine learning models may also identify job descriptions that are relevant to the user, and may generate recommendations of the relevant job descriptions to the user.

In various example embodiments, using expressive features in deep learning models to understand content, as well as users' preferences for content not only provide a richer experience to the user, but also enhances machine learning tools for digital content processing and understanding. Further, content representation learning improves data processing efficiency and data storage.

Deep learning refers to a class of techniques used to model a response by generating complex data transformations and abstractions using multi-layer neural networks. Deep learning can support a vast array of applications, ranging from response prediction, feature generation, natural language understanding, speech or image recognition, and understanding.

Deep learning techniques may be used in modeling a user's response when a machine learning system recommends a digital content item (e.g., an article, a job description, a song, a movie, etc.) to a user in a particular context. Examples of contexts for content recommendations include feed modeling, link prediction, job search, etc. Often a user's response to a digital content item or a digital content recommendation is a function of a relevance of the digital content item to the user's interests, context, or timing of the presentation of the digital content.

Many relevance problems aim at identifying, predicting, or searching something for the user, such as finding a social connection on a SNS, finding a job, an article, or an advertisement that would interest the user. In some example embodiments, relevance helps identify the things that are appropriate for the user based on the user features and one or more types of similarities. For example, a job search engine may find jobs that would be interesting for the user because "similar" users have explored those jobs. However, finding similarities among users, among users and jobs, users and articles, users and advertisements, etc., are complex problems, especially in a system where there could be millions of users, jobs, articles, and advertisements.

In machine learning, categorical features are those features that may have a value from a finite set of possible values. In some example embodiments, categorical features include skills of the user, title of the user, industry of the user, company of the user, and educational institutions attended by the user.

In some example embodiments, similarities may be identified by converting categorical values to vectors (a process referred to herein as "embedding") and then utilizing tools well-suited for operating on vectors. However, a simple vector definition where each value of the category is assigned a position within the vector (a representation sometimes called "bag of words") results in very large vectors with very sparse values (e.g., a single 1 among 35,000 values). Because such vectors are difficult to work with, reducing the size of the vectors, in some instances, is important.

In some example embodiments, obtaining vectors with an embedded semantic meaning is important because similarity analysis is simplified using the embedded semantic meaning. For example, two vectors being close to each other indicates that the two vectors represent two categorical values that are similar.

A machine learning system may utilize embeddings to provide a lower dimensional representation of different features, and can learn the embeddings along with the model parameters. In certain example embodiments, a deep learning model for response prediction is characterized using three "macro" layers: (1) an input layer which takes in the input features, and fetches embeddings for the input, (2) one or more intermediate (or hidden) layers which introduces nonlinear neural net transformations to the inputs, and (3) a response layer which transforms the final results of the intermediate layers to the prediction. The response layer may be one of (a) Sigmoid function (for binary response prediction) or (b) Softmax function (for multinomial response prediction).

In some example embodiments, a machine learning system, using deep neural networks, generates member interest and article feature vectors in a supervised fashion, by jointly learning the member and the article representation that can best predict user engagement and reading behavior with regard to articles presented to members of the SNS via one or more channels (e.g., a SNS feed).

The machine learning system represents member interest features and article features in a common feature subspace, which can then be interacted to obtain member-article affinity features. The interaction may be performed in the intermediate layers of a deep learning model. Deep networks can help obtain the member embedding and the article embedding in a pre-specified K-dimensional feature space. The networks used for article and member embeddings can be obtained from different deep network layers.

Articles can be represented through a combination of article text tokens (e.g., all words, keywords, or tri-letter tokens used in deep semantic similarity networks, etc.), derived article features (e.g., prismatic topics, language, named entities mentioned in the article, etc.), article activity features (e.g., a list of members who have interacted with the article). Of these three, the first two are relatively static (assuming that the article content is not edited too many times), while the third will change during the lifecycle of the article. The article embedding can be derived from the features above. The machine learning system can generate an embedding in each of these dimensions, and then generate the final article embedding based on the dimension embeddings.

A member interest embedding can be derived in a fashion similar to the article representation. In some example embodiments, the member embedding captures two aspects - generality and specificity. Although the machine learning system can use members' reading history to determine member interest features, there is usually a limited reading history for a majority of members. In this respect, the machine learning system can derive members' interest by generalizing members' behavior based on similar members or through profile features. This approach may be helpful in generating different types of member-based embeddings.

### Static vs. dynamic embedding features for feature generation

In the member interest and article embeddings, most of the components are static (e.g., profile features for member interest and words/tokens/topics/named entities in article features). These can be computed once and the rate of refresh is much lower. In contrast, activity embeddings, which are based on interactions by members with various items of digital content are dynamic and need to be recomputed with a certain cadence. The training procedure replicates the feature refresh cadence as much as possible. For example, if the machine learning system recomputes the feature every day based on activities in the past K days, the training data needs to reflect the same.

### Frequent retraining for dynamic features

In most of the embeddings, the feature embeddings are obtained from embeddings of entities which are fairly static (e.g., words, industry, skills, etc.). These embeddings likely do not require daily training. However, in some instances, if the machine learning system learns an embedding for each article or member, then daily training may be required. Also, if a member is represented by articles with which the member has recently interacted, and article embeddings are learned directly, then the machine learning system may need to retrain daily. This also occurs when articles are represented by members who read or interacted with them recently. In some example embodiments, if daily training is prohibitive, then this problem can be simplified by choosing to represent the member embeddings through member profile features, and not model embeddings for each article or member.

In some example embodiments, the machine learning system accesses, from a database, a first affinity score value that represents an affinity between a job description on an online service and a member profile associated with a member of the online service. The first affinity score value is generated based on a first embedding and a second embedding using one or more machine learning algorithms. The first embedding represents the job description, and includes a particular feature that identifies an organization associated with the job description. The second embedding represents the member profile. The machine learning system, based on the first affinity score value exceeding a first threshold value, causes a display of a first recommendation of the job description in a user interface of a client device associated with the member. The machine learning system, based on an indication, received from the client device, of a selection of the job description in response to the first recommendation, updates the second embedding to add the particular feature to the second embedding. The machine learning system, based on the indication of the selection of the job description in response to the first recommendation, generates a third embedding that represents an article associated with the organization. The third embedding includes the particular feature that identifies the organization. The machine learning system, using the one or more machine learning algorithms, generates, based on the updated second embedding and the third embedding, a second affinity score value that represents an affinity between the member profile and the article. The machine learning system, based on the second affinity score value exceeding a second threshold value, causes a display of a second recommendation of the article in the user interface of the client device associated with the member.

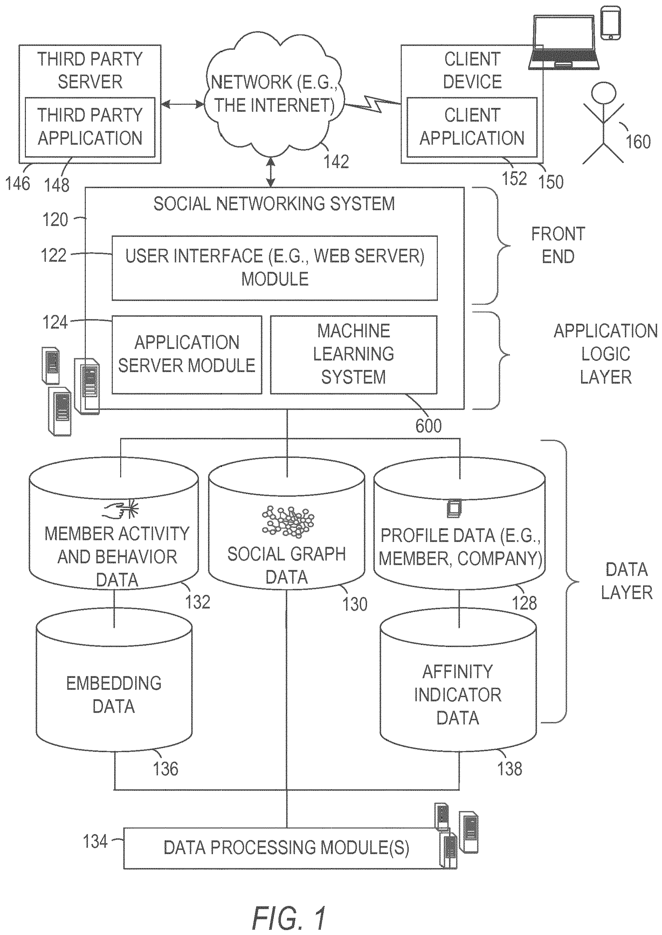

An example method and system for entity representation learning to improve digital content recommendations may be implemented in the context of the client-server system illustrated in FIG. 1. As illustrated in FIG. 1, the machine learning system 600 is part of the social networking system 120. As shown in FIG. 1, the social networking system 120 is generally based on a three-tiered architecture, consisting of a front-end layer, application logic layer, and data layer. As is understood by skilled artisans in the relevant computer and Internet-related arts, each module or engine shown in FIG. 1 represents a set of executable software instructions and the corresponding hardware (e.g., memory and processor) for executing the instructions. To avoid obscuring the inventive subject matter with unnecessary detail, various functional modules and engines that are not germane to conveying an understanding of the inventive subject matter have been omitted from FIG. 1. However, a skilled artisan will readily recognize that various additional functional modules and engines may be used with a social networking system, such as that illustrated in FIG. 1, to facilitate additional functionality that is not specifically described herein. Furthermore, the various functional modules and engines depicted in FIG. 1 may reside on a single server computer, or may be distributed across several server computers in various arrangements. Moreover, although depicted in FIG. 1 as a three-tiered architecture, the inventive subject matter is by no means limited to such architecture.

As shown in FIG. 1, the front end layer consists of a user interface module(s) (e.g., a web server) 122, which receives requests from various client-computing devices including one or more client device(s) 150, and communicates appropriate responses to the requesting device. For example, the user interface module(s) 122 may receive requests in the form of Hypertext Transport Protocol (HTTP) requests, or other web-based, application programming interface (API) requests. The client device(s) 150 may be executing conventional web browser applications and/or applications (also referred to as "apps") that have been developed for a specific platform to include any of a wide variety of mobile computing devices and mobile-specific operating systems (e.g., iOS™, Android™, Windows° Phone).

For example, client device(s) 150 may be executing client application(s) 152. The client application(s) 152 may provide functionality to present information to the user and communicate via the network 142 to exchange information with the social networking system 120. Each of the client devices 150 may comprise a computing device that includes at least a display and communication capabilities with the network 142 to access the social networking system 120. The client devices 150 may comprise, but are not limited to, remote devices, work stations, computers, general purpose computers, Internet appliances, hand-held devices, wireless devices, portable devices, wearable computers, cellular or mobile phones, personal digital assistants (PDAs), smart phones, smart watches, tablets, ultrabooks, netbooks, laptops, desktops, multi-processor systems, microprocessor-based or programmable consumer electronics, game consoles, set-top boxes, network PCs, mini-computers, and the like. One or more users 160 may be a person, a machine, or other means of interacting with the client device(s) 150. The user(s) 160 may interact with the social networking system 120 via the client device(s) 150. The user(s) 160 may not be part of the networked environment, but may be associated with client device(s) 150.

As shown in FIG. 1, the data layer includes several databases, including a database 128 for storing data for various entities of a social graph. In some example embodiments, a "social graph" is a mechanism used by an online service, such as an online social networking service (e.g., provided by the social networking system 120), for defining and memorializing, in a digital format, relationships between different entities (e.g., people, employers, educational institutions, organizations, groups, etc.). Frequently, a social graph is a digital representation of real-world relationships. Social graphs may be digital representations of online communities to which a user belongs, often including the members of such communities (e.g., a family, a group of friends, alums of a university, employees of a company, members of a professional association, etc.). The data for various entities of the social graph may include member profiles, company profiles, educational institution profiles, as well as information concerning various online or offline groups. Of course, with various alternative embodiments, any number of other entities may be included in the social graph, and as such, various other databases may be used to store data corresponding to other entities.

Consistent with some embodiments, when a person initially registers to become a member of the social networking service, the person is prompted to provide some personal information, such as the person's name, age (e.g., birth date), gender, interests, contact information, home town, address, the names of the member's spouse and/or family members, educational background (e.g., schools, majors, etc.), current job title, job description, industry, employment history, skills, professional organizations, interests, and so on. This information is stored, for example, as profile data in the database 128.

Once registered, a member may invite other members, or be invited by other members, to connect via the social networking service. A "connection" may specify a bi-lateral agreement by the members, such that both members acknowledge the establishment of the connection. Similarly, with some embodiments, a member may elect to "follow" another member. In contrast to establishing a connection, the concept of "following" another member typically is a unilateral operation, and at least with some embodiments, does not require acknowledgement or approval by the member that is being followed. When one member connects with or follows another member, the member who is connected to or following the other member may receive messages or updates (e.g., content items) in his or her personalized content stream about various activities undertaken by the other member. More specifically, the messages or updates presented in the content stream may be authored and/or published or shared by the other member, or may be automatically generated based on some activity or event involving the other member. In addition to following another member, a member may elect to follow a company, a topic, a conversation, a web page, or some other entity or object, which may or may not be included in the social graph maintained by the social networking system. With some embodiments, because the content selection algorithm selects content relating to or associated with the particular entities that a member is connected with or is following, as a member connects with and/or follows other entities, the universe of available content items for presentation to the member in his or her content stream increases. As members interact with various applications, content, and user interfaces of the social networking system 120, information relating to the member's activity and behavior may be stored in a database, such as the database 132. An example of such activity and behavior data is the identifier of an online ad consumption event associated with the member (e.g., an online ad viewed by the member), the date and time when the online ad event took place, an identifier of the creative associated with the online ad consumption event, a campaign identifier of an ad campaign associated with the identifier of the creative, etc.

The social networking system 120 may provide a broad range of other applications and services that allow members the opportunity to share and receive information, often customized to the interests of the member. For example, with some embodiments, the social networking system 120 may include a photo sharing application that allows members to upload and share photos with other members. With some embodiments, members of the social networking system 120 may be able to self-organize into groups, or interest groups, organized around a subject matter or topic of interest. With some embodiments, members may subscribe to or join groups affiliated with one or more companies. For instance, with some embodiments, members of the online service may indicate an affiliation with a company at which they are employed, such that news and events pertaining to the company are automatically communicated to the members in their personalized activity or content streams. With some embodiments, members may be allowed to subscribe to receive information concerning companies other than the company with which they are employed. Membership in a group, a subscription or following relationship with a company or group, as well as an employment relationship with a company, are all examples of different types of relationships that may exist between different entities, as defined by the social graph and modeled with social graph data of the database 130. In some example embodiments, members may receive digital communications (e.g., advertising, news, status updates, etc.) targeted to them based on various factors (e.g., member profile data, social graph data, member activity or behavior data, etc.)

The application logic layer includes various application server module(s) 124, which, in conjunction with the user interface module(s) 122, generates various user interfaces with data retrieved from various data sources or data services in the data layer. With some embodiments, individual application server modules 124 are used to implement the functionality associated with various applications, services, and features of the social networking system 120. For example, an ad serving engine showing ads to users may be implemented with one or more application server modules 124. According to another example, a messaging application, such as an email application, an instant messaging application, or some hybrid or variation of the two, may be implemented with one or more application server modules 124. A photo sharing application may be implemented with one or more application server modules 124. Similarly, a search engine enabling users to search for and browse member profiles may be implemented with one or more application server modules 124. Of course, other applications and services may be separately embodied in their own application server modules 124. As illustrated in FIG. 1, social networking system 120 may include the machine learning system 600, which is described in more detail below.

Further, as shown in FIG. 1, a data processing module 134 may be used with a variety of applications, services, and features of the social networking system 120. The data processing module 134 may periodically access one or more of the databases 128, 130, 132, 136, or 138, process (e.g., execute batch process jobs to analyze or mine) profile data, social graph data, member activity and behavior data, embedding data, affinity indicator data, or digital content items and metadata, and generate analysis results based on the analysis of the respective data. The data processing module 134 may operate offline. According to some example embodiments, the data processing module 134 operates as part of the social networking system 120. Consistent with other example embodiments, the data processing module 134 operates in a separate system external to the social networking system 120. In some example embodiments, the data processing module 134 may include multiple servers, such as Hadoop servers for processing large data sets. The data processing module 134 may process data in real time, according to a schedule, automatically, or on demand.

Additionally, a third party application(s) 148, executing on a third party server(s) 146, is shown as being communicatively coupled to the social networking system 120 and the client device(s) 150. The third party server(s) 146 may support one or more features or functions on a website hosted by the third party.

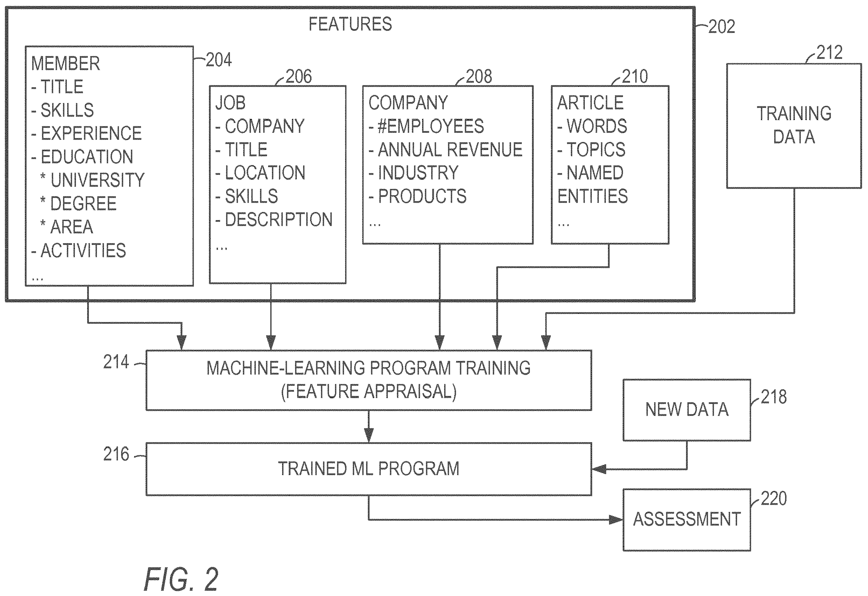

FIG. 2 illustrates the training and use of a machine-learning program, according to some example embodiments. In some example embodiments, machine-learning programs (MLP), also referred to as machine-learning algorithms or tools, are utilized to perform operations associated with searches, such as digital content (e.g., articles, jobs, etc.) searches.

Machine learning is a field of study that gives computers the ability to learn without being explicitly programmed. Machine learning explores the study and construction of algorithms, also referred to herein as tools, that may learn from existing data and make predictions about new data. Such machine-learning tools operate by building a model from example training data 212 in order to make data-driven predictions or decisions expressed as outputs or assessments 220. Although example embodiments are presented with respect to a few machine-learning tools, the principles presented herein may be applied to other machine-learning tools.

In some example embodiments, different machine-learning tools may be used. For example, Logistic Regression (LR), Naive-Bayes, Random Forest (RF), neural networks (NN), matrix factorization, and Support Vector Machines (SVM) tools may be used for classifying or scoring job postings.

In general, there are two types of problems in machine learning: classification problems and regression problems. Classification problems, also referred to as categorization problems, aim at classifying items into one of several category values (for example, is this object an apple or an orange?). Regression algorithms aim at quantifying some items (for example, by providing a value that is a real number). In some embodiments, example machine-learning algorithms provide a job affinity score (e.g., a number from 1 to 100) to qualify each job as a match for a member of the online service (e.g., calculating the job affinity score). In certain embodiments, example machine-learning algorithms provide a member-article affinity score (e.g., a number from 1 to 100) to qualify each article as a match for the member (e.g., calculating the job affinity score). The machine-learning algorithms utilize the training data 212 to find correlations among identified features 202 that affect the outcome.

The machine-learning algorithms utilize features for analyzing the data to generate assessments 220. A feature 202 is an individual measurable property of a phenomenon being observed. The concept of feature is related to that of an explanatory variable used in statistical techniques such as linear regression. Choosing informative, discriminating, and independent features is important for effective operation of the MLP in pattern recognition, classification, and regression. Features may be of different types, such as numeric, strings, and graphs.

In one example embodiment, the features 202 may be of different types and may include one or more of member features 204, job features 206, company features 208, and article features 210. The member features 204 may include one or more of the data in the user profile 128, as described in Fig. 1, such as title, skills, endorsements, experience, education, and the like. The job features 206 may include any data related to the job, and the company features 208 may include any data related to the company. In some example embodiments, article features 210 include word data, topic data, named entity data, and the like.

The machine-learning algorithms utilize the training data 212 to find correlations among the identified features 202 that affect the outcome or assessment 220. In some example embodiments, the training data 212 includes known data for one or more identified features 202 and one or more outcomes, such as jobs searched by users, job suggestions selected for reviews, users changing companies, users adding social connections, users' activities online, etc.

With the training data 212 and the identified features 202, the machine-learning tool is trained at operation 214. The machine-learning tool appraises the value of the features 202 as they correlate to the training data 212. The result of the training is the trained machine-learning program 216.

When the machine-learning program 216 is used to perform an assessment, new data 218 is provided as an input to the trained machine-learning program 216, and the machine-learning program 216 generates the assessment 220 as output. For example, when a user performs a job search, a machine-learning program, trained with social network data, utilizes the user data and the job data, from the jobs in the database, to search for jobs that match the user's profile and activity.

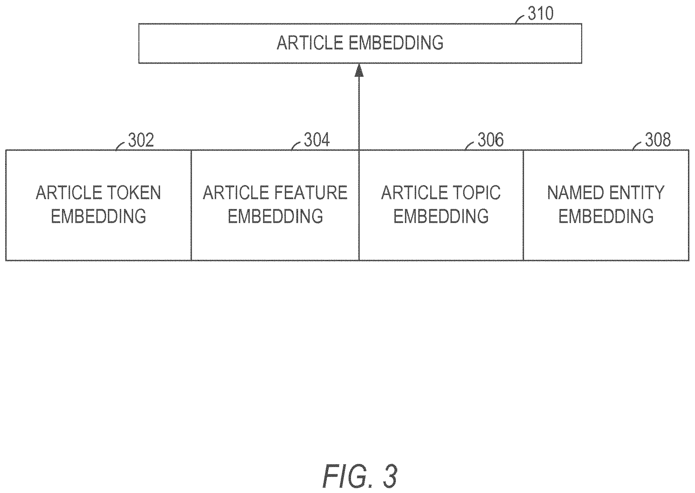

FIG. 3 is a block diagram illustrating an article embedding generated by a machine learning system, according to some example embodiments. As shown in Fig. 3 the final article embedding 310 is generated based on concatenating a plurality of article-based embeddings, such as article token embedding 302, article feature embedding 304, article topic embedding 306, and named topic embedding 308. Other article-related embeddings (e.g., article activity embeddings, etc.) may be included in the plurality of article-based embeddings.

In various example embodiments, the article token embedding 302 includes a document vector generated through the tf-idf weighted word vectors. For example, given a word embedding, the machine learning system 600 generates the document vector as a tf-idf weighted average of word embeddings. In some instances, the machine learning system 600 pre-trains word vectors. In some instances, the machine learning system 600 retrains the word vectors as a part of this model. The vocabulary may be very large in this case.

In some example embodiments, the article token embedding 302 includes a document vector generated through network/word tokenization seen in DSSM. The machine learning system 600 represents each word by tri-letter combinations. This compresses the token vocabulary space.

In certain example embodiments, the article feature embedding 304 is generated based on embeddings of the prismatic topics. The machine learning system 600 learns embeddings for the prismatic tags, and derives article embeddings by taking (max or mean) pooling. In a pooling operation, each dimension of the output is computed individually by taking the mean or max of the values of the input.

Pooling layers reduce a higher dimensional representation into one of lower dimension. The reducing operation can be one of "max," "mean," "sum," "min," etc. For example, a user has multiple skills, and each skill is represented by a k-dimensional embedding. The machine learning system 600 may use max pooling by taking a maximum along each dimension of the embedding to provide a single embedding that "jointly" represents all the skills. In some instances, max pooling (or min pooling) works better than mean pooling. In the example above, if it is assumed that each user's skill is embedded in a lower dimension, and high values on one of these dimensions reveal strong skill along that dimension, max pooling intuitively aggregates all the skills to find how strong a user is among that dimension. Mean pooling may work poorly here, because, mean pooling requires all skills to have high values in a particular dimension for the reduced operation to result in a high value.

The machine learning system 600 determines which embedding features to applying pooling layers on top of. Two applications of pooling layers include: (a) applying pooling when multiple feature embeddings of the same type are present, and (b) applying pooling on top of multiple feature embeddings representing the same entity (e.g., a member).

In various example embodiments, the article feature embedding 304 is generated based on named entities referenced in the article feature.

In certain example embodiments, the article activity embeddings is generated based on data pertaining to members who have performed a specific action on the article (e.g., members who read the article, shared the article, liked the article, etc.). The machine learning system 600 learns embeddings for each member and uses pooling operations to obtain the final embeddings.

In some instances, instead of learning an embedding for each member, the machine learning system 600 can also use member profile features to derive the member embeddings.

In some example embodiments, other entity embeddings (e.g., a job description embedding, a company embedding, a member profile embedding, etc.) is generated using techniques described above with respect to FIG. 3.

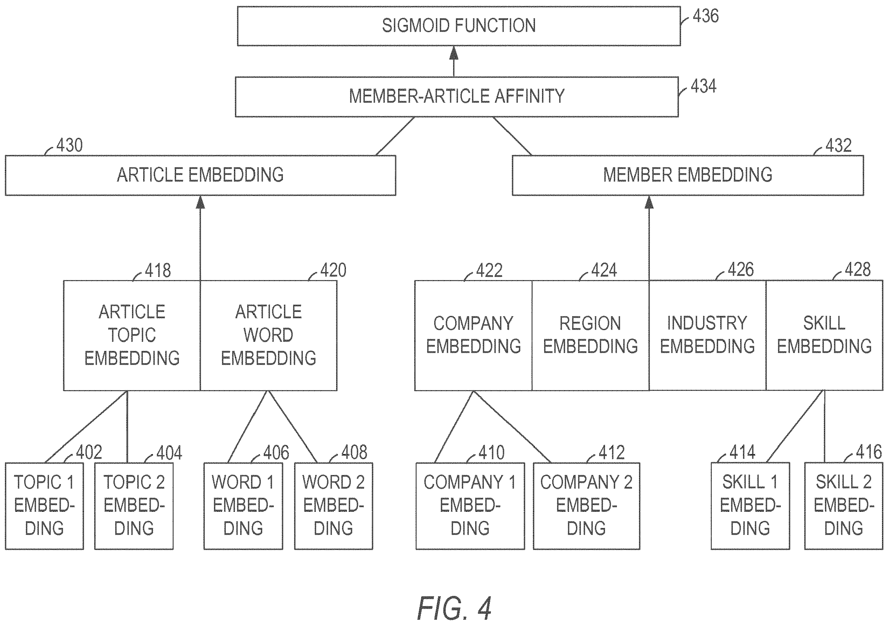

FIG. 4 is a block diagram illustrating a deep network for the determination of the member-article affinity by a machine learning system, according to some example embodiments. The member-article affinity captures members' interest in a particular article. Member-article affinity features can be computed from features that describe the article as well as features that describe a member's interest and the member profile. The member-article affinity features can then be used for predicting the chosen response (e.g., clicks, social actions, read times, etc.) using generalized linear models. An article and member interests are represented in the same space. The member-article affinity may be computed, in some instances, by interacting the feature sets.

As shown in Fig. 4, one or more topic embeddings (e.g., topic 1 embedding 402, topic 2 embedding 404, etc.) are used as input, by the machine learning system 600, to generate article topic embedding 418. The generating of the article topic embedding 418 may include performing a pooling operation on the topic 1 embedding 402 and topic 2 embedding 404.

One or more words embedding (e.g., word 1 embedding 406, word 2 embedding 408, etc.) are used as input to generate article word embedding 420. The generating of the word embedding may include performing a pooling operation on the word 1 embedding 406 and word 2 embedding 408. Other article-based or article-related embodiments may be generated to include additional article features.

A plurality of article-based or article-related embodiments are concatenated to generate a final article embedding 430.

Also shown in Fig. 4 are member-related embeddings, such as company 1 embedding 410 and company 2 embedding 412, that are used as input, by the machine learning system 600, to generate company embedding 422. The company 1 embedding 410 and company 2 embedding 412 represent companies (or organizations) for which the member has or is working. The generating of the company embedding 422 may include performing a pooling operation on the company 1 embedding 410 and company 2 embedding 412.

Fig. 4 also shows skill 1 embedding 414 and skill 2 embedding 416 that are used as input for generating skill embedding 428. The skill 1 embedding 414 and skill 2 embedding 416 represent skills included in the member profile. The generating of the skill embedding 428 may include performing a pooling operation on the skill 1 embedding 414 and skill 2 embedding 416.

Fig. 4 also illustrates region embedding 424, which represents the location (e.g., geographic location) of the member, and industry embedding 426, which represents the industry in which the member is employed.

Other member-profile-based or member-related embodiments may be generated to include additional member features. In some example embodiments, member-profile-based embeddings represent member interest embeddings through embeddings of members industry, company, or skill, which are learnt during training. In some instances, separate embeddings are generated for each profile feature type and then concatenated together to get a next level embedding. In certain example embodiments, member-profile-based embeddings represent a particular member's interests through the member profiles and actions of other members who are being followed by the particular member, or through the member profiles and actions of other member the member interacts with.

In certain example embodiments, the machine learning system 600 uses available clustering mechanism to determine member clusters, learns member cluster embeddings, fetches the member cluster embeddings that are learnt during training, and uses the member cluster embeddings as input for generating the next level of member-profile-based embeddings or of member-related embeddings.

According to some example embodiments, member activity embeddings represent each member through articles with which the member interacted (e.g., selected, clicked on, read, etc.) recently. These articles themselves can be represented through article-related embeddings.

The company embedding 422, region embedding 424, which represents the location (e.g., geographic location) of the member, industry embedding 426, and skill embedding 428 are concatenated to generate the final member embedding 432.

As illustrated in Fig. 4, topic 1 embedding 402, topic 2 embedding 404, word 1 embedding 406, word 2 embedding 408, company 1 embedding 410, company 2 embedding 412, skill 1 embedding 414, and skill 2 embedding 416 are fetched at the input layer of the deep learning network to be used as input for the intermediate level of the deep learning network.

At the intermediate layers of the deep learning network, nonlinear neural net transformations are introduced to the input embeddings to first generate the article topic embedding 418, the article word embedding 420, the company embedding 422, the region embedding 424, the industry embedding 426, and the skill embedding 428, and then generate the final article embedding 430 and the final member embedding 432. Also included in the intermediate layers of the deep learning network is an affinity feature level for generating additional features pertaining to an affinity between the member and the article. The additional features are generated based on interacting the final article embedding 430 and the final member embedding 432 using a cosine similarity transformation, a Hadamard product, or a fully connected layer. The additional features are used as input to the response layer where a sigmoid function 438 is applied to the additional features to transform the final results of the intermediate levels into a prediction. The prediction may include a prediction pertaining to the type of interaction the member will likely have with the article (e.g., click on the link, share the article, like the article, etc.), read times, etc.

In various example embodiments, the machine learning system 600 accesses, from a database record, an article token embedding, and at least one of an article feature embedding or an article activity embedding. The machine learning system 600, using one or more machine learning algorithms, generates the article embedding based on concatenating the article token embedding and the at least one of the article feature embedding or the article activity embedding. In some instances, the article token embedding includes a document vector generated based on one or more weighted word vectors representing one or more words included in the article. In some instances, the article token embedding includes a document vector generated based on word tokenization of the one or more words included in the article according to a semantic similarity model. In certain example embodiments, the article token embedding is generated based on concatenating a first document vector generated based on one or more weighted word vectors representing one or more words included in the article, and a second document vector generated based on word tokenization of the one or more words included in the article according to a semantic similarity model.

In certain example embodiments, the article feature embedding includes an article topic vector. The article topic vector includes a set of features that represent one or more topics referenced in the article. In various example embodiments, the article feature embedding includes a named entity vector. The named entity vector includes a set of features that represent one or more named entities referenced in the article. According to some example embodiments, the article feature embedding is generated based on concatenating an article topic vector that includes a first set of features that represent one or more topics referenced in the article, and a named entity vector that includes a second set of features that represent one or more named entities referenced in the article. In some instances, the article activity embedding includes an activity vector generated based on data pertaining to interactions, by one or more members of the online service, with the article.

In various example embodiments, the machine learning system 600 accesses, from a database record, a member-profile-based embedding, and at least one of a member cluster embedding or a member activity embedding. The machine learning system 600, using the one or more machine learning algorithms, generates the member embedding based on concatenating the member-profile-based embedding and at least one of the member cluster embedding or the member activity embedding. In some example embodiments, the member-profile-based embedding is generated based on concatenating a member industry embedding, a member company embedding, and a member skill embedding; and the member industry embedding, the member company embedding, and the member skill embedding are generated based on a member profile of a member of the online service. In various example embodiments, the member-profile-based embedding includes a member interest vector that includes a set of features that represent online actions, by a member of the online service, pertaining to other members of the online service.

According to some example embodiments, the member cluster embedding is generated based on learning a set of features pertaining to a cluster of members of the online service identified to be similar using a clustering algorithm. In certain example embodiments, the member activity embedding includes a member activity vector. The member activity vector includes a set of features pertaining to interactions over a period of time, by a member of the online service, with one or more other articles published via the web server of the online service.

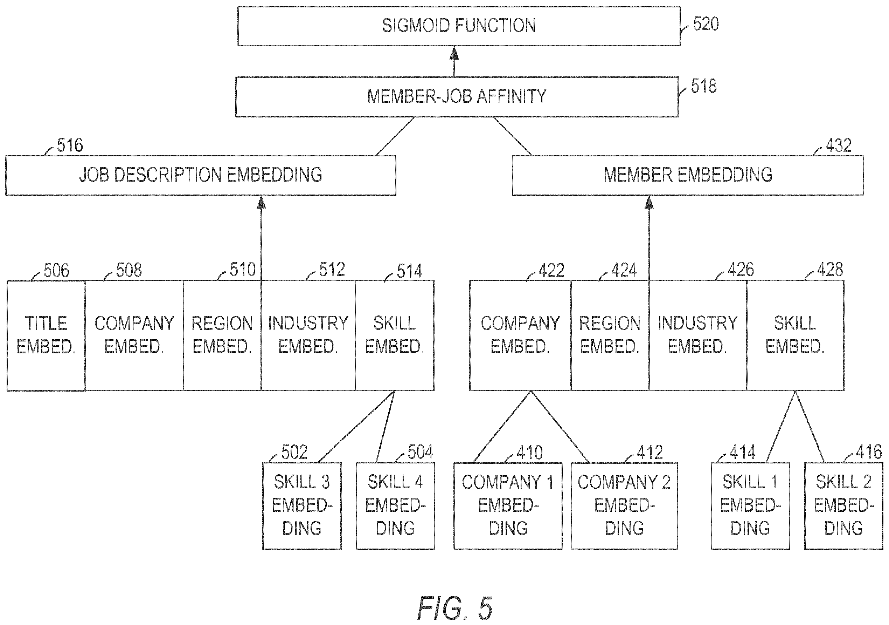

FIG. 5 is a block diagram illustrating a deep network for the determination of the member-job affinity by a machine learning system, according to some example embodiments. The member-job affinity captures members' interest in a particular job. Member-job affinity features can be computed from features that describe the job as well as features that describe a member's interest and the member profile. The member-job affinity features can then be used for predicting the chosen response (e.g., clicks, social actions, read times, etc.) using generalized linear models. A job and member interests are represented in the same space. The member-job affinity may be computed, in some instances, by interacting the feature sets.

As shown in Fig. 5, one or more skill embeddings (e.g., skill 3 embedding 502, skill 4 embedding 504, etc.) are used as input, by the machine learning system 600, to generate skill embedding 514. The skill 3 embedding 502 and the skill 4 embedding 504 represent the skills included in the job description. The generating of the skill embedding 514 may include performing a pooling operation on the skill 3 embedding 502 and the skill 4 embedding 504.

Fig. 5 also shows title embedding 506, which represents the title of the job description, and company embedding 508 which represents the company (or organization) associated with the job description. For example, the job description describes a job advertised by the company on the online service.

Fig. 5 also illustrates region embedding 510, which represents the location (e.g., geographic location) of the job, and industry embedding 512, which represents the industry associated with the job. Other job-based or job-related embodiments may be generated to include additional job features.

A plurality of job-based or job-related embodiments (e.g., title embedding 506, company embedding 508, region embedding 510, industry embedding 512, skill embedding 514, etc.) are concatenated to generate a final job description embedding 516.

Also shown in Fig. 5 are the member-related embeddings discussed above with respect to FIG. 4. According to some example embodiments, member activity embeddings represent each member through job descriptions with which the member interacted (e.g., selected, clicked on, read, etc.) recently. These job descriptions themselves can be represented through job-related embeddings.

As stated above with respect to FIG. 4, the company embedding 422, region embedding 424, which represents the location (e.g., geographic location) of the member, industry embedding 426, and skill embedding 428 are concatenated to generate the final member embedding 432.

As illustrated in Fig. 5, skill 3 embedding 502, skill 4 embedding 504, company 1 embedding 410, company 2 embedding 412, skill 1 embedding 414, and skill 2 embedding 416 are fetched at the input layer of the deep learning network to be used as input for the intermediate level of the deep learning network.

At the intermediate layers of the deep learning network, nonlinear neural net transformations are introduced to the input embeddings to first generate the title embedding 506, the company 2mbedding 508, the region embedding 510, the industry embedding 512, the skill embedding 514, the company embedding 422, the region embedding 424, the industry embedding 426, and the skill embedding 428, and then generate the final job description embedding 516 and the final member embedding 432. Also included in the intermediate layers of the deep learning network is an affinity feature level for generating additional features pertaining to an affinity between the member and the article. The additional features are generated based on interacting the final job description embedding 516 and the final member embedding 432 using a cosine similarity transformation, a Hadamard product, or a fully connected layer. The additional features are used as input to the response layer where a sigmoid function 438 is applied to the additional features to transform the final results of the intermediate levels into a prediction. The prediction may include a prediction pertaining to the type of interaction the member will likely have with the job description (e.g., click, share, like, etc.), read times, etc.

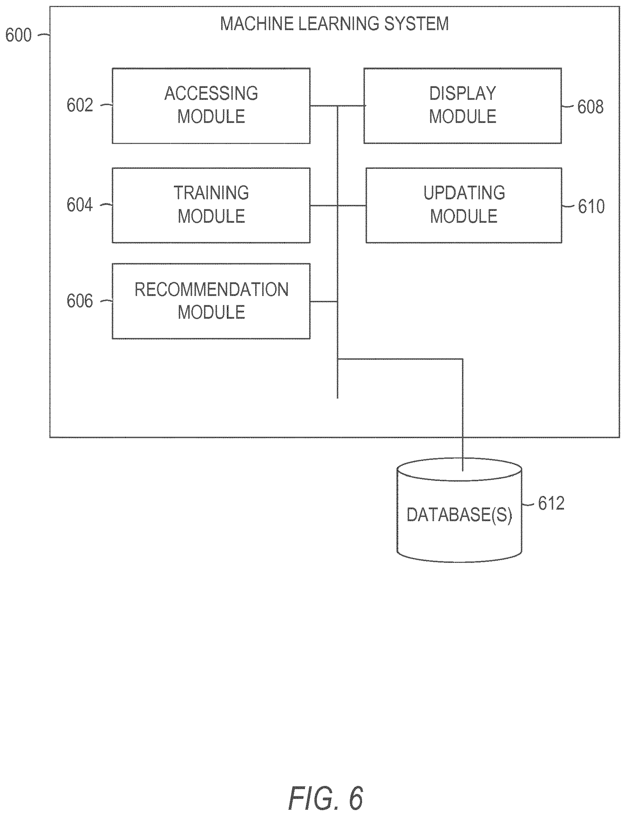

FIG. 6 is a block diagram illustrating components of the machine learning system 600, according to some example embodiments. As shown in FIG. 5, the machine learning system 600 includes an accessing module 602, a training module 604, a recommendation module 606, a display module 608, and an updating module 610, all configured to communicate with each other (e.g., via a bus, shared memory, or a switch).

According to some example embodiments, the accessing module 602 accessing, from a database, a first affinity score value that represents an affinity between a job description on an online service and a member profile associated with a member of the online service.

The training module 604 generates the first affinity score value based on a first embedding and a second embedding using one or more machine learning algorithms. The first embedding represents the job description, and includes a particular feature that identifies an organization associated with the job description. The second embedding represents the member profile associated with the member of the online service.

The recommendation module 606 generates recommendations of various digital content items (e.g., a job recommendation, an article, etc.).

The display module 608, based on the first affinity score value exceeding a first threshold value, causes a display of a first recommendation of the job description in a user interface of a client device associated with the member. The determination that the first affinity score value exceeding the first threshold value may be performed by a module of the machine learning system 600 (e.g., the recommendation module 606, the display module 608, etc.).

The updating module 610, based on an indication, received from the client device, of a selection of (e.g., a click on) the job description in response to the first recommendation, updates the second embedding to add the particular feature that identifies the organization associated with the job description to the second embedding. In some instances, the updating of an embedding includes adding, deleting, or modifying data associated with the embedding in a database record. The indication of the selection of the job description may be received by a module of the machine learning system 600 (e.g., the accessing module 602).

The training module 604, based on the indication of the selection of the job description in response to the first recommendation, generates a third embedding. The third embedding represents an article associated with the organization. The third embedding also includes the particular feature that identifies the organization.

The training module 604, using the one or more machine learning algorithms, generates, based on the updated second embedding and the third embedding, a second affinity score value. The second affinity score value represents an affinity between the member profile and the article.

The display module 608, based on the second affinity score value exceeding a second threshold value, causes a display of a second recommendation of the article in the user interface of the client device associated with the member. The determination that the second affinity score value exceeding the second threshold value may be performed by a module of the machine learning system 600 (e.g., the recommendation module 606, the display module 608, etc.).

In some example embodiments, the display module 608 causes a generating of an enhanced user interface on the client device. The generating of the enhanced user interface includes causing a display of a particular digital content item (e.g., an article, a job description, a blog, etc.).

To perform one or more of its functionalities, the machine learning system 600 may communicate with one or more other systems. For example, an integration system may integrate the machine learning system 600 with one or more email servers, web servers, one or more databases, or other servers, systems, or repositories.

Any one or more of the modules described herein may be implemented using hardware (e.g., one or more processors of a machine) or a combination of hardware and software. For example, any module described herein may configure a hardware processor (e.g., among one or more hardware processors of a machine) to perform the operations described herein for that module. In some example embodiments, any one or more of the modules described herein may comprise one or more hardware processors and may be configured to perform the operations described herein. In certain example embodiments, one or more hardware processors are configured to include any one or more of the modules described herein.

Moreover, any two or more of these modules may be combined into a single module, and the functions described herein for a single module may be subdivided among multiple modules. Furthermore, according to various example embodiments, modules described herein as being implemented within a single machine, database, or device may be distributed across multiple machines, databases, or devices. The multiple machines, databases, or devices are communicatively coupled to enable communications between the multiple machines, databases, or devices. The modules themselves are communicatively coupled (e.g., via appropriate interfaces) to each other and to various data sources, so as to allow information to be passed between the applications so as to allow the applications to share and access common data. Furthermore, the modules may access one or more databases 612 (e.g., database 128, 130, 132, 136, or 138).

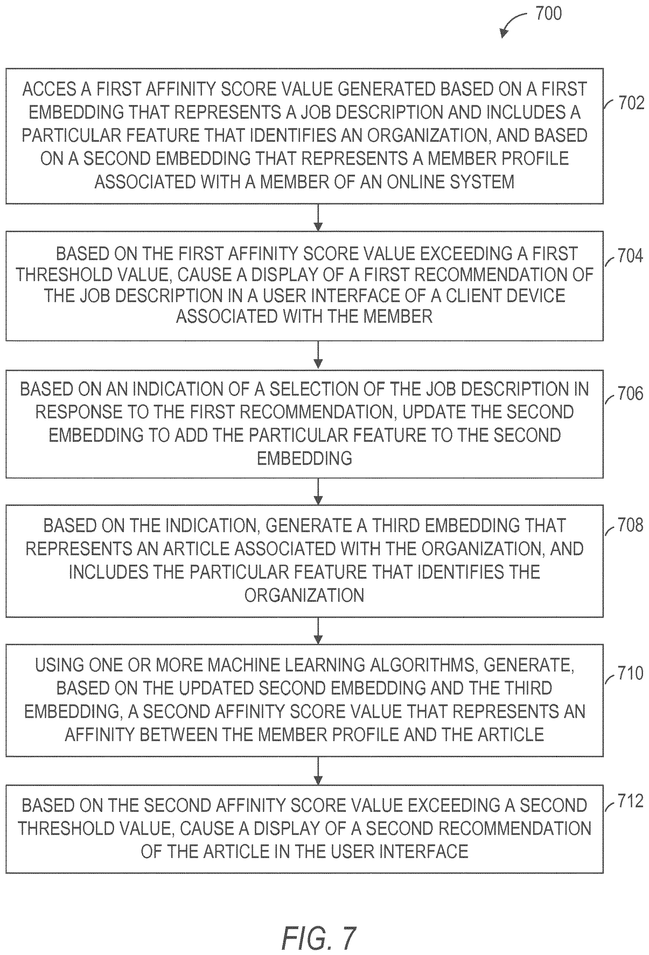

FIGS. 7-12 are flowcharts illustrating a method for entity representation learning to improve digital content recommendations, according to some example embodiments. Operations in the method 700 illustrated in FIG. 7 may be performed using modules described above with respect to FIG. 6. As shown in FIG. 7, method 700 may include one or more of method operations 702, 704, 706, 708, 710, and 712, according to some example embodiments.

At operation 702, the accessing module 602 accesses, from a database (e.g., database 612), a first affinity score value that represents an affinity between a job description on an online service and a member profile associated with a member of the online service. The first affinity score value is generated, by the training module 604, based on a first embedding and a second embedding using one or more machine learning algorithms. The first embedding represents the job description. The first embedding includes a particular feature that identifies an organization associated with the job description. The second embedding represents the member profile. In some example embodiments, the job description is advertised or posted by the organization, and is for a job at the organization.

In some example embodiments, the first embedding includes (e.g., is) a first feature vector that includes a first set of features that represent the job description. The particular feature that identifies the organization associated with the job description is included in the first set of features. The second embedding includes (e.g., is) a second feature vector that includes a second set of features that represent the member profile.

At operation 704, the display module 608 causes a display of a first recommendation of the job description in a user interface of a client device associated with the member. The first recommendation of the job description is generated by the recommendation module 606. The causing of the display of the first recommendation of the job description is based on the first affinity score value exceeding a first threshold value. The determination that the first affinity score value exceeds the first threshold value may be performed by a module of the machine learning system 600 (e.g., the recommendation module 606, the display module 608, etc.).

In some example embodiments, the first recommendation is generated using nearest neighbor representations for the job description based on a Euclidian distance value.

At operation 706, the updating module 610, based on an indication, received from the client device, of a selection of the job description in response to the first recommendation, updates the second embedding to add the particular feature to the second embedding. In some example embeddings, additional features (e.g., an indication of an interaction by the member with the job description) may be added to the first embedding representing the job description, to the second embedding representing the member profile, to both the first embedding and the second embedding, or to other embeddings (e.g., an organization embedding representing the organization) based on the indication of the selection of the job description.

At operation 708, the training module 604, based on the indication of the selection of the job description in response to the first recommendation, generates a third embedding that represents an article associated with the organization. The third embedding includes the particular feature that identifies the organization.

At operation 710, the training module 604, using the one or more machine learning algorithms, generates a second affinity score value that represents an affinity between the member profile and the article. The generating of the second affinity score value is based on the updated second embedding that represents the member profile and based on the third embedding that represents the article.

At operation 712, the display module 608 causes a display of a second recommendation of the article in the user interface of the client device associated with the member. The second recommendation of the article is generated by the recommendation module 606. The causing of the display of the second recommendation of the article is based on the second affinity score value exceeding a second threshold value. The determination that the second affinity score value exceeds the second threshold value may be performed by a module of the machine learning system 600 (e.g., the recommendation module 606, the display module 608, etc.).

In certain example embodiments, the second recommendation is generated using nearest neighbor representations for the article based on a Euclidian distance value.

In various example embodiments, the first embedding, the second embedding, the third embedding, or other embeddings are stored at a centralized location. The storing at the centralized location provides accessibility, by one or more recommendation applications, to the first embedding, the second embedding, the third embedding, or other embeddings, and sharing of embedding data among the one or more recommendation applications.

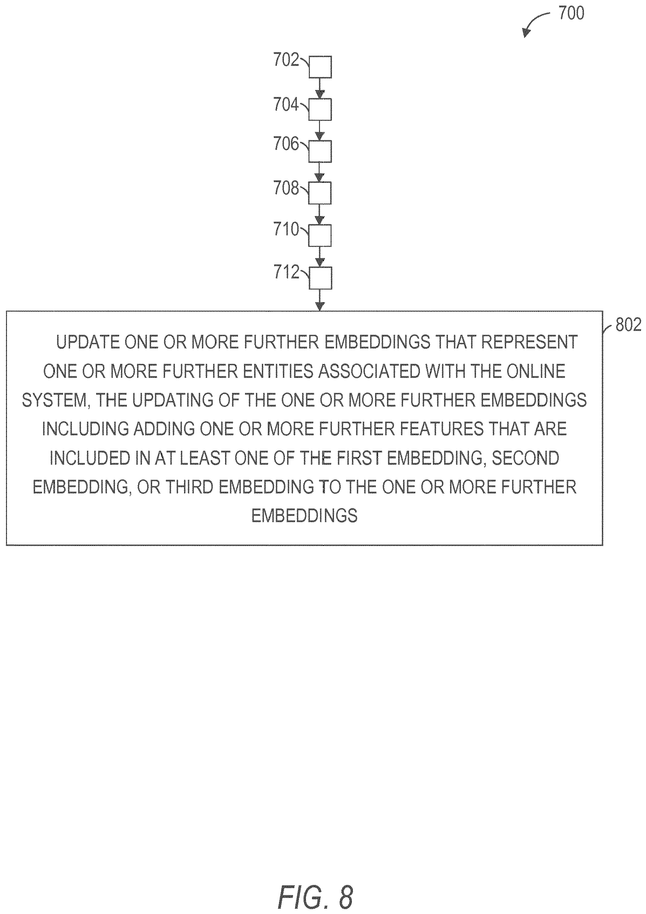

Further details with respect to the method operations of the method 700 are described below with respect to FIGS. 8-11.

As shown in FIG. 8, the method 700 includes operation 802, according to some example embodiments. In some example embodiments, the job description, the member profile, and the article are digital content items on the online service (e.g., stored in a record of a database associated with the online service, published on a web server associated with the online service, etc.). Digital content items are a type of entity associated with the online service. Examples of other types of entities associated with the online service are companies, industries, and interest clusters. Embeddings may be generated for various types of entities associated with the online service.

Operation 802 may be performed after operation 712 of FIG. 7, in which the display module 608 causes a display of a second recommendation of the article in the user interface of the client device associated with the member.

At operation 802, the updating module 610 updates one or more further embeddings that represent one or more further entities associated with the online service. The updating of the one or more further embeddings includes adding one or more further features that are included in at least one of the first embeddings, second embeddings, or third embeddings to the one or more further embeddings. The updating of the one or more further embeddings is based on at least one of the indication of the selection of the job description in response to the first recommendation, or an indication, received from the client device, of a selection of the article in response to the second recommendation.

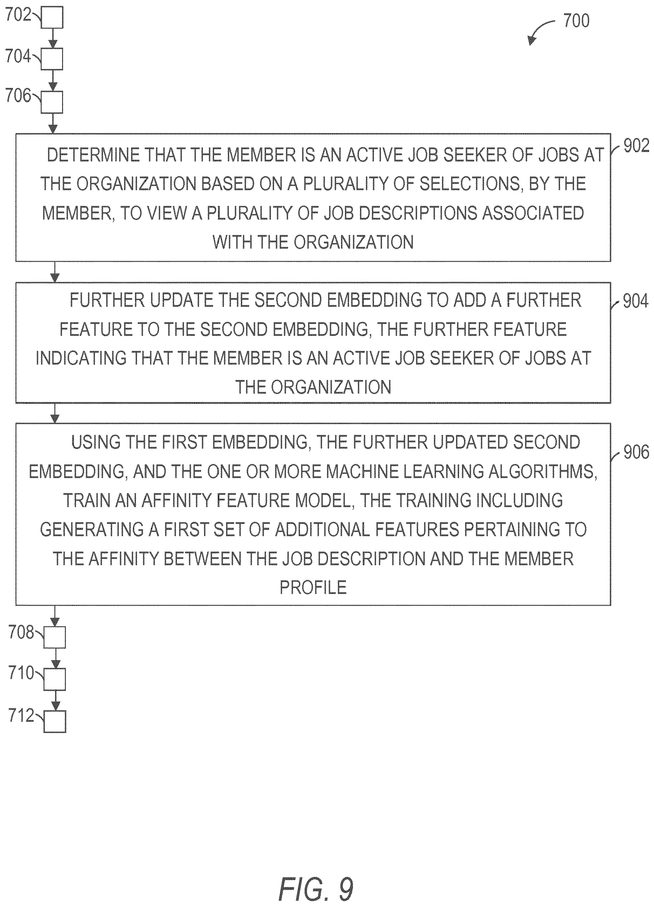

As shown in FIG. 9, the method 700 may include one or more of operations 902, 904, or 906, according to some example embodiments. In some example embodiments, the one or more machine learning algorithms pertain to at least one of recommending job descriptions to one or more members of the online service or recommending articles to the one or more members of the online service. The first embedding includes a first feature vector. The first feature vector includes a first set of features that represent the job description. The particular feature is included in the first set of features. The second embedding includes a second feature vector. The second feature vector includes a second set of features that represent the member profile.

Operation 902 may be performed after operation 706 of FIG. 7, in which the updating module 610, based on the indication, received from the client device, of the selection of the job description in response to the first recommendation, updates the second embedding to add the particular feature to the second embedding. At operation 902, the training module 604 determines that the member is an active job seeker of jobs at the organization based on a plurality of selections, by the member, to view a plurality of job descriptions associated with the organization. In some instances, the determining that the member is an active job seeker is based on a plurality of selections, by the member, to view a plurality of job descriptions associated with one or more organizations.

Operation 904 may be performed after operation 902. The updating module 610 further updates the second embedding to add a further feature to the second embedding. The further feature indicates that the member is an active job seeker of jobs at the organization.

Operation 906 may be performed after operation 904. At operation 906, the training module 604, using the first embedding, the further updated second embedding, and the one or more machine learning algorithms, trains an affinity feature model. The training of the affinity feature model includes generating a first set of additional features pertaining to the affinity between the job description and the member profile based on the first feature vector and the second feature vector.

In some example embodiments, the affinity feature model predicts at least one of a first likelihood that the member will select the job description, or a second likelihood that the member will select the article.

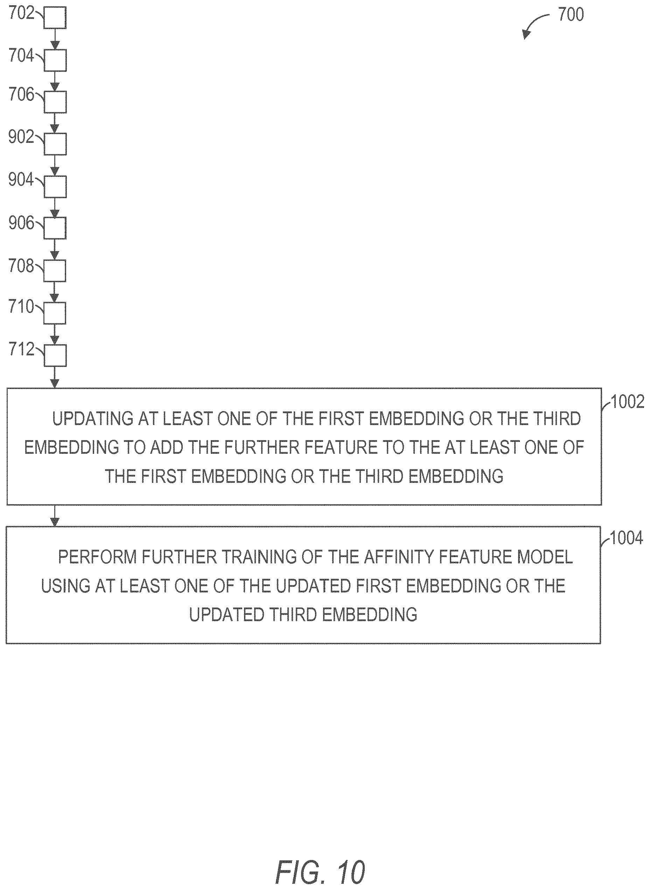

As shown in FIG. 10, the method 700 may include one or more of operation 1002 or 1004, according to some example embodiments. Operation 1002 may be performed after operation 712 of FIG. 9, in which the display module 608 causes a display of the second recommendation of the article in the user interface of the client device associated with the member. At operation 1002, the updating module 610 updates at least one of the first embedding or the third embedding to add the further feature to the at least one of the first embedding or the third embedding.

Operation 1004 may be performed after operation 1002. At operation 1004, the training module 604 performs further training of the affinity feature model using at least one of the updated first embedding or the updated third embedding.

In some example embodiments, the generating of the second affinity score value that represents the affinity between the member profile and the article is based on the training of the affinity feature model using at least one of the updated first embedding, the updated second embedding, or the updated third embedding.

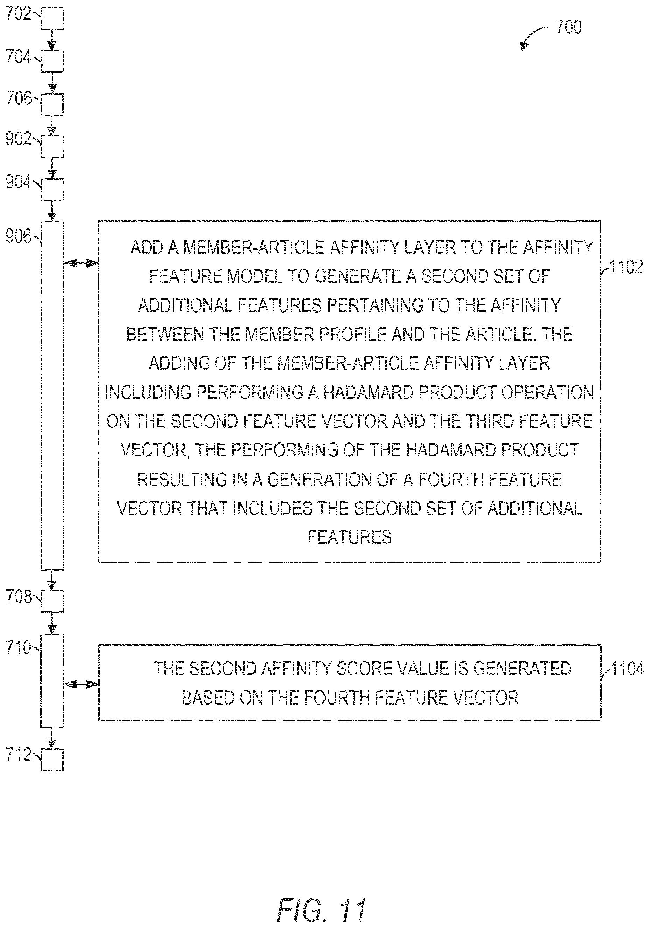

As shown in FIG. 11, the method 700 may include one or more of operation 1102 or 1104, according to some example embodiments. In some example embodiments, the third embedding includes a third feature vector. The third feature vector includes a third set of features that represent the article associated with the organization. The particular feature is included in the third set of features.

Operation 1102 may be performed as part (e.g., a precursor task, a subroutine, or a portion) of operation 906 of FIG. 9, in which the training module 604, using the first embedding, the further updated second embedding, and the one or more machine learning algorithms, trains an affinity feature model. At operation 1102, the training module 604 adds a member-article affinity layer to the affinity feature model to generate a second set of additional features pertaining to the affinity between the member profile and the article based on the second feature vector and the third feature vector. The adding of the member-article affinity layer to the affinity feature model includes performing a Hadamard product operation on the second feature vector and the third feature vector. The performing of the Hadamard product results in a generation of a fourth feature vector that includes the second set of additional features.

Operation 1104 may be performed as part (e.g., a precursor task, a subroutine, or a portion) of operation 710 of FIG. 9, in which the training module 604, using the one or more machine learning algorithms, generates the second affinity score value that represents the affinity between the member profile and the article. At operation 1102, the training module 604 generates the second affinity score value based on the fourth feature vector that includes the second set of additional features.

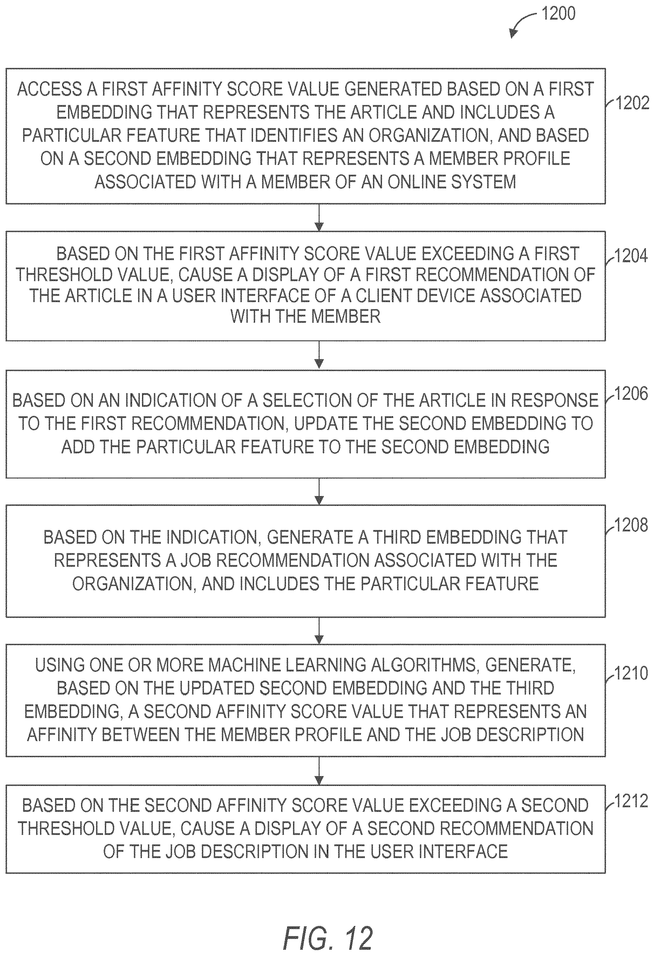

FIG. 12 is a flowchart illustrating a method for entity representation learning to improve digital content recommendations, according to some example embodiments. Operations in the method 1200 illustrated in FIG. 12 may be performed using modules described above with respect to FIG. 6. As shown in FIG. 12, method 1200 may include one or more of method operations 1202, 1204, 1206, 1208, 1210, and 1212, according to some example embodiments.

At operation 1202, the accessing module 602 accesses, from a database (e.g., database 612), a first affinity score value that represents an affinity between an article on an online service and a member profile associated with a member of the online service. The first affinity score value is generated, by the training module 604, based on a first embedding and a second embedding using one or more machine learning algorithms. The first embedding represents the article. The first embedding includes a particular feature that identifies an organization associated with (e.g., mentioned in) the article. The second embedding represents the member profile. In some example embodiments, the article is published by the organization, or on behalf of the organization, on a web server of the online service.

In some example embodiments, the first embedding includes (e.g., is) a first feature vector that includes a first set of features that represent the article. The particular feature that identifies the organization associated with the article may be included in the first set of features. The second embedding includes (e.g., is) a second feature vector that includes a second set of features that represent the member profile.

At operation 1204, the display module 608 causes a display of a first recommendation of the article in a user interface of a client device associated with the member. The first recommendation of the article is generated by the recommendation module 606. The causing of the display of the first recommendation of the article is based on the first affinity score value exceeding a first threshold value. The determination that the first affinity score value exceeds the first threshold value may be performed by a module of the machine learning system 600 (e.g., the recommendation module 606, the display module 608, etc.).

In some example embodiments, the first recommendation is generated using nearest neighbor representations for the article based on a Euclidian distance value.

At operation 1206, the updating module 610, based on an indication, received from the client device, of a selection of the article (e.g., clicking on a link representing the article) in response to the first recommendation, updates the second embedding to add the particular feature to the second embedding. In some example embeddings, additional features (e.g., an indication of an interaction by the member with the article) may be added to the first embedding representing the article, to the second embedding representing the member profile, to both the first embedding and the second embedding, or to other embeddings (e.g., an organization embedding representing the organization) based on the indication of the selection of the article.

At operation 1208, the training module 604, based on the indication of the selection of the article in response to the first recommendation, generates a third embedding that represents a job description associated with the organization. The third embedding includes the particular feature that identifies the organization.

At operation 1210, the training module 604, using the one or more machine learning algorithms, generates a second affinity score value that represents an affinity between the member profile and the job description. The generating of the second affinity score value may be based on the updated second embedding that represents the member profile and based on the third embedding that represents the job description.

At operation 1212, the display module 608 causes a display of a second recommendation of the job description in the user interface of the client device associated with the member. The second recommendation of the job description IS generated by the recommendation module 606. The causing of the display of the second recommendation of the job description is based on the second affinity score value exceeding a second threshold value. The determination that the second affinity score value exceeds the second threshold value may be performed by a module of the machine learning system 600 (e.g., the recommendation module 606, the display module 608, etc.).

In certain example embodiments, the second recommendation is generated using nearest neighbor representations for the job description based on a Euclidian distance value.

In various example embodiments, the first embedding, the second embedding, the third embedding, or other embeddings are stored at a centralized location. The storing at the centralized location provides accessibility, by one or more recommendation applications, to the first embedding, the second embedding, the third embedding, or other embeddings, and sharing of embedding data among the one or more recommendation applications.

In some example embodiments, the article, the member profile, and the job description are entities associated with the online service. The updating module 610 updates one or more further embeddings that represent one or more further entities associated with the online service. The updating of the one or more further embeddings includes adding one or more further features that are included in at least one of the first embedding, second embedding, or third embedding to the one or more further embeddings. The updating of the one or more further embeddings is based on at least one of the indication of the selection of the article in response to the first recommendation, or an indication, received from the client device, of a selection of the job description in response to the second recommendation.

In various example embodiments, the first recommendation is generated using nearest neighbor representations for the article based on a Euclidian distance value. In certain example embodiments, the second recommendation is generated using nearest neighbor representations for the job description based on a Euclidian distance value.

In some example embodiments, the first embedding, the second embedding, and the third embedding are stored at a centralized location. The storing at the centralized location provides accessibility, by one or more recommendation applications, to the first embedding, the second embedding, and the third embedding, and sharing of embedding data among the one or more recommendation applications.

### MODULES, COMPONENTS AND LOGIC

Certain embodiments are described herein as including logic or a number of components, modules, or mechanisms. Modules may constitute either software modules (e.g., code embodied (1) on a non-transitory machine-readable medium or (2) in a transmission signal) or hardware-implemented modules. A hardware-implemented module is a tangible unit capable of performing certain operations and may be configured or arranged in a certain manner. In example embodiments, one or more computer systems (e.g., a standalone, client or server computer system) or one or more processors may be configured by software (e.g., an application or application portion) as a hardware-implemented module that operates to perform certain operations as described herein.

In various embodiments, a hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit (ASIC)) to perform certain operations. A hardware-implemented module may also comprise programmable logic or circuitry (e.g., as encompassed within a general-purpose processor or other programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired) or temporarily or transitorily configured (e.g., programmed) to operate in a certain manner and/or to perform certain operations described herein. Considering embodiments in which hardware-implemented modules are temporarily configured (e.g., programmed), each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiple of such hardware-implemented modules exist contemporaneously, communications may be achieved through signal transmission (e.g., over appropriate circuits and buses that connect the hardware-implemented modules). In embodiments in which multiple hardware-implemented modules are configured or instantiated at different times, communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors or processor-implemented modules, not only residing within a single machine, but deployed across a number of machines. In some example embodiments, the one or more processors or processor-implemented modules may be located in a single location (e.g., within a home environment, an office environment or as a server farm), while in other embodiments the one or more processors or processor-implemented modules may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., application program interfaces (APIs).)

### ELECTRONIC APPARATUS AND SYSTEM

Example embodiments may be implemented in digital electronic circuitry, or in computer hardware, firmware, software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a stand-alone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry, e.g., a field programmable gate array (FPGA) or an application-specific integrated circuit (ASIC).

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that that both hardware and software architectures require consideration. Specifically, it will be appreciated that the choice of whether to implement certain functionality in permanently configured hardware (e.g., an ASIC), in temporarily configured hardware (e.g., a combination of software and a programmable processor), or a combination of permanently and temporarily configured hardware may be a design choice. Below are set out hardware (e.g., machine) and software architectures that may be deployed, in various example embodiments.

### EXAMPLE MACHINE ARCHITECTURE AND MACHINE-READABLE MEDIUM

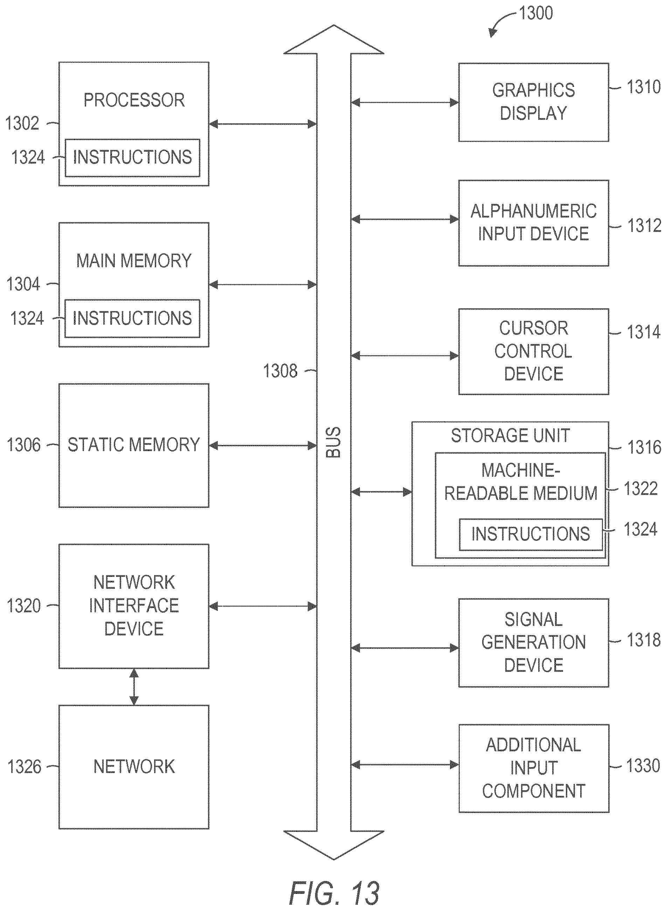

FIG. 13 is a block diagram illustrating components of a machine 1300, according to some example embodiments, able to read instructions 1324 from a machine-readable medium 1322 (e.g., a non-transitory machine-readable medium, a machine-readable storage medium, a computer-readable storage medium, or any suitable combination thereof) and perform any one or more of the methodologies discussed herein, in whole or in part. Specifically, FIG. 13 shows the machine 1300 in the example form of a computer system (e.g., a computer) within which the instructions 1324 (e.g., software, a program, an application, an applet, an app, or other executable code) for causing the machine 1300 to perform any one or more of the methodologies discussed herein may be executed, in whole or in part.

In alternative embodiments, the machine 1300 operates as a standalone device or may be connected (e.g., networked) to other machines. In a networked deployment, the machine 1300 may operate in the capacity of a server machine or a client machine in a server-client network environment, or as a peer machine in a distributed (e.g., peer-to-peer) network environment. The machine 1300 may be a server computer, a client computer, a personal computer (PC), a tablet computer, a laptop computer, a netbook, a cellular telephone, a smartphone, a set-top box (STB), a personal digital assistant (PDA), a web appliance, a network router, a network switch, a network bridge, or any machine capable of executing the instructions 1324, sequentially or otherwise, that specify actions to be taken by that machine. Further, while only a single machine is illustrated, the term "machine" shall also be taken to include any collection of machines that individually or jointly execute the instructions 1324 to perform all or part of any one or more of the methodologies discussed herein.

The machine 1300 includes a processor 1302 (e.g., a central processing unit (CPU), a graphics processing unit (GPU), a digital signal processor (DSP), an application specific integrated circuit (ASIC), a radio-frequency integrated circuit (RFIC), or any suitable combination thereof), a main memory 1304, and a static memory 1306, which are configured to communicate with each other via a bus 1308. The processor 1302 may contain microcircuits that are configurable, temporarily or permanently, by some or all of the instructions 1324 such that the processor 1302 is configurable to perform any one or more of the methodologies described herein, in whole or in part. For example, a set of one or more microcircuits of the processor 1302 may be configurable to execute one or more modules (e.g., software modules) described herein.

The machine 1300 may further include a graphics display 1310 (e.g., a plasma display panel (PDP), a light emitting diode (LED) display, a liquid crystal display (LCD), a projector, a cathode ray tube (CRT), or any other display capable of displaying graphics or video). The machine 1300 may also include an alphanumeric input device 1312 (e.g., a keyboard or keypad), a cursor control device 1314 (e.g., a mouse, a touchpad, a trackball, a joystick, a motion sensor, an eye tracking device, or other pointing instrument), a storage unit 1316, an audio generation device 1318 (e.g., a sound card, an amplifier, a speaker, a headphone jack, or any suitable combination thereof), and a network interface device 1320.

The storage unit 1316 includes the machine-readable medium 1322 (e.g., a tangible and non-transitory machine-readable storage medium) on which are stored the instructions 1324 embodying any one or more of the methodologies or functions described herein. The instructions 1324 may also reside, completely or at least partially, within the main memory 1304, within the processor 1302 (e.g., within the processor's cache memory), or both, before or during execution thereof by the machine 1300. Accordingly, the main memory 1304 and the processor 1302 may be considered machine-readable media (e.g., tangible and non-transitory machine-readable media). The instructions 1324 may be transmitted or received over the network 1326 via the network interface device 1320. For example, the network interface device 1320 may communicate the instructions 1324 using any one or more transfer protocols (e.g., hypertext transfer protocol (HTTP)).

In some example embodiments, the machine 1300 may be a portable computing device, such as a smart phone or tablet computer, and have one or more additional input components 1330 (e.g., sensors or gauges). Examples of such input components 1330 include an image input component (e.g., one or more cameras), an audio input component (e.g., a microphone), a direction input component (e.g., a compass), a location input component (e.g., a global positioning system (GPS) receiver), an orientation component (e.g., a gyroscope), a motion detection component (e.g., one or more accelerometers), an altitude detection component (e.g., an altimeter), and a gas detection component (e.g., a gas sensor). Inputs harvested by any one or more of these input components may be accessible and available for use by any of the modules described herein.

As used herein, the term "memory" refers to a machine-readable medium able to store data temporarily or permanently and may be taken to include, but not be limited to, random-access memory (RAM), read-only memory (ROM), buffer memory, flash memory, and cache memory. While the machine-readable medium 1322 is shown in an example embodiment to be a single medium, the term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of storing the instructions 1324 for execution by the machine 1300, such that the instructions 1324, when executed by one or more processors of the machine 1300 (e.g., processor 1302), cause the machine 1300 to perform any one or more of the methodologies described herein, in whole or in part. Accordingly, a "machine-readable medium" refers to a single storage apparatus or device, as well as cloud-based storage systems or storage networks that include multiple storage apparatus or devices. The term "machine-readable medium" shall accordingly be taken to include, but not be limited to, one or more tangible (e.g., non-transitory) data repositories in the form of a solid-state memory, an optical medium, a magnetic medium, or any suitable combination thereof.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute software modules (e.g., code stored or otherwise embodied on a machine-readable medium or in a transmission medium), hardware modules, or any suitable combination thereof. A "hardware module" is a tangible (e.g., non-transitory) unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field programmable gate array (FPGA) or an ASIC. A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, and such a tangible entity may be physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software (e.g., a software module) may accordingly configure one or more processors, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The performance of certain operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" or "an" are herein used, as is common in patent documents, to include one or more than one instance. Finally, as used herein, the conjunction "or" refers to a non-exclusive "or," unless specifically stated otherwise.

## Claims

1. A method comprising:
accessing, from a database, a first affinity score value that represents an affinity between a job description on an online service and a member profile associated with a member of the online service, the first affinity score value being generated based on a first embedding and a second embedding using one or more machine learning algorithms, the first embedding representing the job description, and including a particular feature that identifies an organization associated with the job description, the second embedding representing the member profile;
based on the first affinity score value exceeding a first threshold value, causing a display of a first recommendation of the job description in a user interface of a client device associated with the member;
based on an indication, received from the client device, of a selection of the job description in response to the first recommendation, updating the second embedding to add the particular feature to the second embedding;
based on the indication of the selection of the job description in response to the first recommendation, generating a third embedding that represents an article associated with the organization, and includes the particular feature that identifies the organization, the generating of the third embedding being performed using one or more hardware processors;
using the one or more machine learning algorithms, generating, based on the updated second embedding and the third embedding, a second affinity score value that represents an affinity between the member profile and the article; and
based on the second affinity score value exceeding a second threshold value, causing a display of a second recommendation of the article in the user interface of the client device associated with the member.

2. The method of claim 1, wherein the job description, the member profile, and the article are entities associated with the online service, and wherein the method further comprises:
updating one or more further embeddings that represent one or more further entities associated with the online service, the updating of the one or more further embeddings including adding one or more further features that are included in at least one of the first embedding, second embedding, or third embedding to the one or more further embeddings, the updating of the one or more further embeddings being based on at least one of the indication of the selection of the job description in response to the first recommendation, or an indication, received from the client device, of a selection of the article in response to the second recommendation.

3. The method of claim 1, wherein the one or more machine learning algorithms pertain to at least one of recommending job descriptions to one or more members of the online service or recommending articles to the one or more members of the online service,
wherein the first embedding includes a first feature vector that includes a first set of features that represent the job description, the particular feature being included in the first set of features,
wherein the second embedding includes a second feature vector that includes a second set of features that represent the member profile, and
wherein the method further comprises:
determining that the member is an active job seeker of jobs at the organization based on a plurality of selections, by the member, to view a plurality of job descriptions associated with the organization; and
further updating the second embedding to add a further feature to the second embedding, the further feature indicating that the member is an active job seeker of jobs at the organization; and
using the first embedding, the further updated second embedding, and the one or more machine learning algorithms, training an affinity feature model, the training including generating a first set of additional features pertaining to the affinity between the job description and the member profile based on the first feature vector and the second feature vector.

4. The method of claim 3, wherein the affinity feature model predicts at least one of a first likelihood that the member will select the job description, or a second likelihood that the member will select the article.

5. The method of claim 3, further comprising:
updating at least one of the first embedding or the third embedding to add the further feature to the at least one of the first embedding or the third embedding; and
performing further training of the affinity feature model using at least one of the updated first embedding or the updated third embedding.

6. The method of claim 5, wherein the generating of the second affinity score value that represents the affinity between the member profile and the article is based on the training of the affinity feature model using at least one of the updated first embedding, the updated second embedding, or the updated third embedding.

7. The method of claim 3, wherein the third embedding includes a third feature vector that includes a third set of features that represent the article associated with the organization, the particular feature being included in the third set of features,
wherein the training of the affinity feature model includes:
adding a member-article affinity layer to the affinity feature model to generate a second set of additional features pertaining to the affinity between the member profile and the article based on the second feature vector and the third feature vector, the adding of the member-article affinity layer to the affinity feature model including performing a Hadamard product operation on the second feature vector and the third feature vector, the performing of the Hadamard product resulting in a generation of a fourth feature vector that includes the second set of additional features, and
wherein the second affinity score value is generated based on the fourth feature vector that includes the second set of additional features.

8. The method of claim 1, wherein the first recommendation is generated using nearest neighbor representations for the job description based on a Euclidian distance value.

9. The method of claim 1, wherein the second recommendation is generated using nearest neighbor representations for the article based on a Euclidian distance value.

10. The method of claim 1, wherein the first embedding, the second embedding, and the third embedding are stored at a centralized location, the storing at the centralized location providing accessibility, by one or more recommendation applications, to the first embedding, the second embedding, and the third embedding, and sharing of embedding data among the one or more recommendation applications.

11. A system comprising:
one or more hardware processors; and
a non-transitory machine-readable medium for storing instructions that, when executed by the one or more hardware processors, cause the one or more hardware processors to perform operations comprising:
accessing, from a database, a first affinity score value that represents an affinity between an article on an online service and a member profile associated with a member of the online service, the first affinity score value being generated based on a first embedding and a second embedding using one or more machine learning algorithms, the first embedding representing the article, and including a particular feature that identifies an organization associated with the article, the second embedding representing the member profile;
based on the first affinity score value exceeding a first threshold value, causing a display of a first recommendation of the article in a user interface of a client device associated with the member;
based on an indication, received from the client device, of a selection of the article in response to the first recommendation, updating the second embedding to add the particular feature to the second embedding;
based on the indication of the selection of the article in response to the first recommendation, generating a third embedding that represents a job recommendation associated with the organization, and includes the particular feature that identifies the organization;
using the one or more machine learning algorithms, generating, based on the updated second embedding and the third embedding, a second affinity score value that represents an affinity between the member profile and the job description; and
based on the second affinity score value exceeding a second threshold value, causing a display of a second recommendation of the job description in the user interface of the client device associated with the member.

12. The system of claim 11, wherein the article, the member profile, and the job description are entities associated with the online service, and wherein the operations further comprise:
updating one or more further embeddings that represent one or more further entities associated with the online service, the updating of the one or more further embeddings including adding one or more further features that are included in at least one of the first embedding, second embedding, or third embedding to the one or more further embeddings, the updating of the one or more further embeddings being based on at least one of the indication of the selection of the article in response to the first recommendation, or an indication, received from the client device, of a selection of the job description in response to the second recommendation.

13. A non-transitory machine-readable medium for storing instructions that, when executed by one or more hardware processors, cause the one or more hardware processors to perform operations comprising:
accessing, from a database, a first affinity score value that represents an affinity between a job description on an online service and a member profile associated with a member of the online service, the first affinity score value being generated based on a first embedding and a second embedding using one or more machine learning algorithms, the first embedding representing the job description, and including a particular feature that identifies an organization associated with the job description, the second embedding representing the member profile;
based on the first affinity score value exceeding a first threshold value, causing a display of a first recommendation of the job description in a user interface of a client device associated with the member;
based on an indication, received from the client device, of a selection of the job description in response to the first recommendation, updating the second embedding to add the particular feature to the second embedding;
based on the indication of the selection of the job description in response to the first recommendation, generating a third embedding that represents an article associated with the organization, and includes the particular feature that identifies the organization;
using the one or more machine learning algorithms, generating, based on the updated second embedding and the third embedding, a second affinity score value that represents an affinity between the member profile and the article; and
based on the second affinity score value exceeding a second threshold value, causing a display of a second recommendation of the article in the user interface of the client device associated with the member.

14. The non-transitory machine-readable medium of claim 16, wherein the one or more machine learning algorithms pertain to at least one of recommending job descriptions to one or more members of the online service or recommending articles to the one or more members of the online service,
wherein the first embedding includes a first feature vector that includes a first set of features that represent the job description, the particular feature being included in the first set of features,
wherein the second embedding includes a second feature vector that includes a second set of features that represent the member profile, and
wherein the operations further comprise:
determining that the member is an active job seeker of jobs at the organization based on a plurality of selections, by the member, to view a plurality of job descriptions associated with the organization; and
updating the second embedding to add a further feature to the second embedding, the further feature indicating that the member is an active job seeker of jobs at the organization; and
using the first embedding, the updated second embedding, and the one or more machine learning algorithms, training an affinity feature model, the training including generating a first set of additional features pertaining to an affinity between the job description and the member profile based on the first feature vector and the second feature vector.

15. The non-transitory machine-readable medium of claim 17, wherein the affinity feature model predicts at least one of a first likelihood that the member will select the job description, or a second likelihood that the member will select the article.
